# EUROPEAN PATENT APPLICATION

(11) **EP 1 193 905 A2**
(43) Date of publication of application: **03.04.2002**
(21) Application number: 01307777.1
(22) Date of filing: 12.09.2001
(51) Int. Cl.: H04L 12/14, H04L 12/56

(54) **Communication system and method for determining user fee on the basis of quality of service**

(30) Priority: 12.09.2000 JP 2000277121
(71) Applicant: NEC CORPORATION, Tokyo (JP)
(72) Inventor: Nitta, Yoshio, Tokyo (JP)
(74) Representative: Moir, Michael Christopher

(57) **Abstract**

A communication system is composed of a quality determining unit (3, 5, 23, 25), a gateway (3, 23), and a user-fee determining unit (4, 24). The quality determining unit (3, 5, 23, 25) determines a QoS (quality of service). The gateway (3, 23) transfers an IP datagram at said QoS. The user-fee determining unit (4, 24) determines a user fee for said IP datagram based on said QoS.

## Description

### Background of the Invention

### 1. Field of the Invention

The present invention relates to a communication system and a communication method. More particularly, the present invention relates to a communication system and a communication method that provide communication service of diverse quality.

### 2. Description of the Related Art

Conventionally, a user fee for communication service is charged to a user on the basis of data quantity or communication time. In other cases, a fixed user fee is charged to the user. That is, the user fee for the communication service does not correspond to a quality of service. Therefore, the user may feel that the usage fee does not correspond to the convenience of the communication service provided for the user.

The user fee is preferably charged to the user, corresponding to the convenience of the communication service provided for the user.

In addition, the QoS (Quality of Service), which influences the convenience of the communication service, is preferably optimized. A communication service quality controller for providing communication at an optimal communication service quality is disclosed in Japanese Laid-Open Patent Application (JP-A 2000-32056).

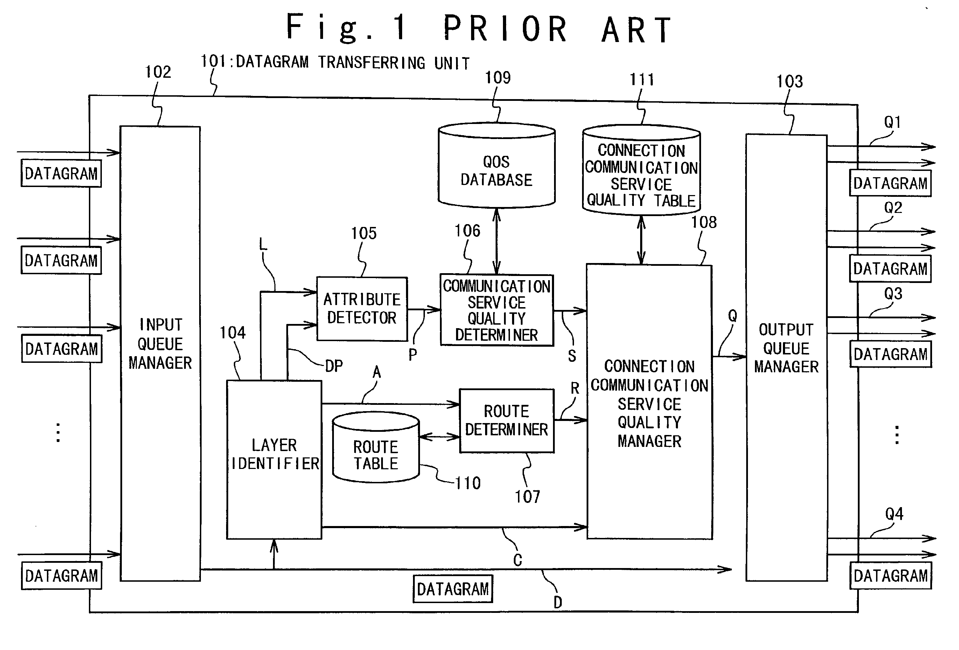

As shown in Fig. 1, the conventional communication-service quality controller includes a datagram transferring unit 101. The datagram transferring unit 101 is provided with an input queue manager 102, an output queue manager 103, a layer identifier 104, an attribute detector 105, a communication service quality determiner 106, a route determiner 107, a connection communication-service quality manager 108, a QoS database 109, a route table 110 and a connection communication-service quality table 111.

The schematic operation of the communication-service quality controller will be described below. In the communication-service quality controller, a transmission destination is determined by the data of a protocol layer 3 and protocol layers after it included in the datagram. Moreover, the attribute detector 105 extracts the communication attribute of the communication from the information of the respective protocol layers 4 to 7 or any of them. On the basis of the quality information of the connection corresponding to the extracted attribute information, the communication service quality at which the datagram is sent is determined by the communication service quality determiner 105 and the connection communication service quality manager 108.

Various communication services are provided for the user. For example, there are various protocols used for the communication. Also, there are various ToSs (Type Of Services) to transfer IP datagrams.

Here, a QoS required for the various communication services may be different depending on a communication procedure. For example, the required QoS may be different depending on the communication protocol and the ToS.

It is desirable that the QoS is optimally controlled on the basis of the communication procedure. In particular, it is desirable that the QoS is optimally changed on the basis of the protocol. Moreover, it is desirable that the QoS is optimally changed on the basis of the ToS.

Japanese Open Laid Patent Application (Jp-A-Heisei 4-49439) discloses another system which may be related to the present invention. The system includes a client terminal and a database server storing a database. The database server determines a fee for the use of the database on the basis of the user ID transmitted from a client terminal to the server. However, the other system is not used for transfer of IP datagrams.

### Summary of the Invention

Therefore, an object of the preferred embodiments of the present invention is to provide a communication system in which a usage fee is charged to a user corresponding to a convenience provided for the user.

Another object of the preferred embodiments of the present invention is to provide a communication system in which a communication system quality is optimally controlled on the basis of a communication procedure. In particular, the object of the present invention is to provide a communication system in which a communication service quality is optimally changed on the basis of a protocol used for the communications. Moreover, the object of the present invention is to provide a communication system in which a communication service quality is optimally changed on the basis of ToS.

A communication system is composed of a quality determining unit, a gateway, and a user fee determining unit. The quality determining unit determines a QoS (quality of service). The gateway transfers an IP datagram at the QoS. The user fee determining unit determines a user fee for the IP datagram based on the QoS.

The gateway transfers a group of IP datagrams including the IP datagram. In this case, the QoS preferably includes a priority for the IP datagram in the transfer of the group of IP datagrams.

The QoS preferably includes a maximum allowable difference from a predetermined delay time for transferring the IP datagram.

The gateway may include a buffer transiently storing the IP datagram. In this case, the QoS preferably includes a size of the buffer.

The QoS preferably includes provision of a firewall service.

Also, the QoS preferably includes provision of a VTN (Virtual Personal Network) service.

The gateway is preferably provided with an API (Application Interface) for accessing the quality determining unit to set the QoS.

Preferably, the gateway detects a protocol used for the transfer of the IP datagram, and the quality determining unit determines the QoS based on the protocol.

In this case, the quality determining unit may include a first table indicative of a correspondence between the protocol and the QoS, and determines the QoS referring to the first table.

The quality determining unit preferably determines the QoS based on a ToS (Type of Service) of the IP datagram.

In this case, the quality determining unit may includes a second table indicative of a correspondence among the protocol, the ToS and the QoS, and determines the QoS referring to the second table.

The IP datagram includes an IP address of a user communicating the IP datagram. The quality determining unit preferably determines the QoS based on the IP address.

In this case, the quality determining unit may include a third table indicative of a correspondence among the protocol, the IP address and the QoS, and determines the QoS referring to the third table.

Another aspect of the present invention is a communication system composed of a gateway that transfers an IP datagram, and a quality determining unit. The gateway detects a protocol used for the transfer of the IP datagram. The quality determining unit determines a QoS based on the detected protocol. The gateway transfers the IP datagram at the QoS.

Another aspect of the present invention is a communication system composed of a gateway that transfers an IP datagram, and a user fee determining unit. The gateway detects a protocol used for the transfer of the IP datagram. The user fee determining unit determines a user fee for the IP datagram based on the QoS.

The user fee determining unit preferably determines the user fee based on a ToS of the IP datagram.

Still another aspect of the present invention is a communication method composed of:
determining a QoS;
transferring an IP datagram at the QoS by a communication system; and
determining a user fee for use of the communication system based on the QoS.

Still another aspect of the present invention is a communication method composed of:
receiving an IP datagram;
detecting a protocol used for transmitting the IP datagram;
determining a QoS; and
transferring the IP datagram at the QoS.

Still another aspect of the present invention is a communication method composed of:
transferring an IP datagram by a communication system;
detecting a protocol used for transmitting the IP datagram;
determining a user fee for use of the communication system based on the protocol.

### Brief Description of the Drawings

Preferred features of the present invention will now be described, by way of example only, with reference to the accompanying drawings, in which:
Fig. 1 shows a conventional communication service quality controller.
Fig. 2 shows a communication system of a first embodiment of the present invention; and,
Fig 3 shows a communication system of a second embodiment of the present invention.

### Description of the Preferred Embodiments

Embodiments of the present invention will be described below with reference to the attached drawings.

### First Embodiment

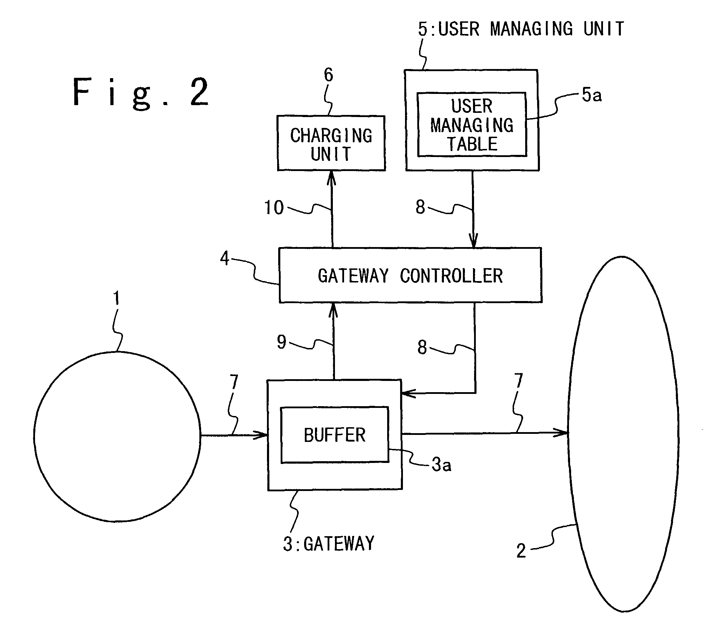

As shown in Fig. 2, a communication system of a first embodiment of the present invention is provided with a first communication network 1, a second communication network 2, a gateway 3, a gateway controller 4, a user managing unit 5 and a charging unit 6.

The gateway 3 is a proxy server for transferring IP datagrams 7 from the first communication network 1 to the second communication network 2. The gateway 3 includes a buffer 3a. The gateway 3 receives the IP datagrams 7 from the first communication network 1, and transiently stores the IP datagrams 7 in the buffer 3a. The gateway 3 reads out the stored IP datagrams 7 to transfer the IP datagram 7 to the second communication network 2. The buffer 3a is provided for a communication session. For each communication session, the gateway 3 is provided with a buffer to store IP datagrams 7.

The gateway controller 4 controls the gateway 3 and also determines a user fee for using the communication system. The user fee is determined on the basis of a QoS for transfer of the IP datagrams 7 by the gateway 3.

The user managing unit 5 includes a management table 5a used for determining the QoS for transfer of the IP datagrams 7 by the gateway 3. The management table 5a describes the correspondence among a protocol used for transfer of the IP datagrams 7, a ToS (Type of Service) of the IP datagrams 7 and the QoS.

The charging unit 6 settles the determined user fee by money transfer from an account of the user.

In the communication system, the user fee is determined on the basis of the QoS for transfer of the IP datagrams 7, and this results in that the user fee is charged on the basis of the convenience provided for the user. Moreover, in the communication system, the QoS is optimized on the basis of the protocol used for the transfer of the IP datagrams 7, and the ToS of the IP datagrams 7.

The operation of the communication system will be described below in detail.

Let us suppose that communication sessions S₁ To Sₙ (n is a positive integer.) of transmitting the IP datagrams 7 from the first communication network 1 to the second communication network 2 are established. Here, an IP datagram of the IP datagrams 7 that is communicated in a session Sᵢ is referred to as an IP datagram 7_{I}, where i is a natural number equal to or less than n. Various protocols may be used in each of the established sessions S₁ To Sₙ, such as TCP/IP (Transmission Control Protocol / Internet Protocol), UDP (User Datagram Protocol) and RTP (Real Time Protocol).

A communication terminal communicating each of the IP datagrams 7 determines a protocol for each session, on the basis of the content of the transferred IP datagrams 7. For example, the communication terminal may determine that RTP is to be used in a session requiring a high real-time property, such as a session transferring an IP datagram having animation data.

In order to transfer the IP datagrams 7 on various protocols, the gateway 3 operates on the basis of SOCKS (RFC1928). Even if the various protocols are used for each session, the gateway 3 can transfer the IP datagrams 7 corresponding to the protocols.

The gateway 3 receives the IP datagram 7 from the first communication network 1. The gateway 3 detects the protocol used for the communication in the session transmitting the IP datagram 7, from the content of a header portion of the IP datagram 7. The protocol used in the session Si is confirmed from the content of the header of the IP datagram 7ᵢ. Moreover, the gateway 3 detects the ToS of the IP datagrams 7, from the content of a header of the IP datagram 7.

The gateway 3 determines the QoS from the detected protocol and ToS. The content of the management table 5a, which describes the correspondence among the protocol, the ToS, and the QoS, is sent in advance from the user managing unit 5 to the gateway 3 by using a control signal 8. And the gateway 3 determines the QoS from the detected protocol and ToS, referring to the content of the management table 5a.

Here, the QoS is represented by various indexes. In the first embodiment, the priorities for transfer of each of the IP datagrams 7, the maximum allowable deference from the predetermined delay time, and the size of the buffer 3a prepared for each session are used as the indexes representative of the QoS. The gateway 3 determines a priority for each of the IP datagrams 7 in the transfer of the IP datagrams 7. The QoS includes the determined priorities. The maximum allowable deference implies the variation in the time it takes for the IP datagram to arrive at a transmission destination from a transmission source. As the maximum allowable deference becomes larger, the variation becomes larger in the amount of the data arriving at the transmission destination per unit period. The size of the buffer 3a often influences the smoothness of the transfer of the IP datagrams 7. The QoS includes the size of the buffer 3a.

The management table 5a describes the correspondence among the protocol, the ToS, the priorities for transfer of each of the IP datagrams 7, the maximum allowable deference in the delay time variations, and the size of the buffer 3a. Referring to the management table 5a, the gateway 3 determines the priorities for transfer of each of the IP datagrams 7, the maximum allowable value in the delay time variations, and the size of the buffer 3a on the basis of the protocol used in each session and the ToS of the IP datagram 7.

As an example, let us consider a session carrying out a communication by using RTP. The RTP is used for real-time transfer of data, such as transfer of animation data. A high real-time property is necessary for the session carrying out the communication by the RTP. Therefore, the gateway 3 determines that the priority of the session carrying out the communication by using the RTP is high. When a large number of IP datagrams 7₁ to 7ₙ are transferred through the gateway 3, the IP datagram transmitted in the session carrying out the communication by using the RTP is transferred at a higher priority. Thus, the high real-time property is reserved in the session carrying out the communication by using the RTP.

Moreover, the gateway 3 determines that the session carrying out the communication by using the RTP has the smallest maximum allowable deference of the delay time. As mentioned above, the session carrying out the communication by using the RTP is necessary to keep the high real-time property. Therefore, the maximum allowable deference of the transmitted IP datagram is kept small in the session carrying out the communication by using the RTP. Accordingly, the animation is smoothly reproduced, for example, in the session transmitting the IP datagram having the animation data by using the RTP.

Furthermore, the gateway 3 determines that the size of the buffer 3a prepared in the gateway 3 is large for the session carrying out the communication by using the RTP. This is because the delay time is adjusted by using the buffering function of the gateway 3. For example, the gateway 3, if a protocol used in a communication in a certain session requires a small delay time variation such as the RTP, uses the buffer 3a to stabilize the data amount of the IP datagram transmitted per unit period in the session. Accordingly, the gateway 3 reduces the delay time variation in the IP datagrams transmitted in the session. As the size of the buffer 3a is greater, it is easier to stabilize the data amount. So, it is defined that the capacity of the buffer 3a is large, in the session requiring the high real-time property, such as the session carrying out the communication by using the RTP.

Similarly in a session carrying out a communication by using another protocol, the priorities, the maximum allowable value in the delay time variations of the IP datagram transmitted in the session, and the capacity of the buffer 3a correspondingly prepared for the session are determined on the basis of the usage protocol.

The gateway 3 transfers the IP datagrams 7 at the QoS determined by the above mentioned processes. That is, the gateway 3 transfers the IP datagrams 7 at the priority determined for each IP datagram 7. The gateway 3 transfers the IP datagram 7 while keeping the delay time deference smaller than the maximum allowable deference. The gateway 3 transfers the IP datagrams 7 while using the buffer 3a having the determined size.

The gateway 3 informs the determined QoS, the data amount of the IP datagrams 7 and the communication time required to carry out the communication of the IP datagram 7, of the gateway controller 4 as offer service information 10. The gateway controller 4 determines the user fee for using the communication system on the QoS, the data amount and the communication time. The gateway controller 4 reports the determined user fee to the charging unit 6 by a user-fee information signal 10. The charging unit 6 settles the user fee by money transfer from an account of the user on the basis of the usage fee information signal 10.

In the communication system of the first embodiment, the user fee corresponding to the QoS is charged to the user. This means that the user fee is charged on the basis of the convenience provided for the user.

Moreover, the QoS is optimally changed on the basis of the protocol and the ToS. When the IP datagram is transmitted, the required QoS is different depending on the protocol and the ToS of the IP datagram. Since the QoS is determined on the basis of the protocol and the ToS, the communication is done at the optimal QoS.

The above-mentioned communication system in the first embodiment can be considered as the system in which the user fee is determined on the basis of the protocol used in the transmission and the ToS of the IP datagram, from another viewpoint. That is, if the IP datagram is transmitted at the protocol requiring the high QoS, a higher user fee is charged. If not, a lower user fee is charged. Also, if the IP datagram having the ToS requiring the high QoS is transmitted, a higher usage fee is charged, and if not, a lower usage fee is charged. Accordingly, the user fee is charged on the basis of the convenience provided for the user.

In the first embodiment, the QoS may include other indexes. For example, the communication service quality may include parameters such as a data error rate and the like. Also, a part of the indexes of the communication service quality used in the first embodiment may not be used.

Moreover, the first communication network 1 and the second communication network 2 may be a fixed network or a mobile communication network. Moreover, the first communication network 1 and the second communication network 2 may be a data communication network such as the Internet. Furthermore, the first communication network 1 and the second communication network 2 may be any of a public network and a private communication network.

### Second Embodiment

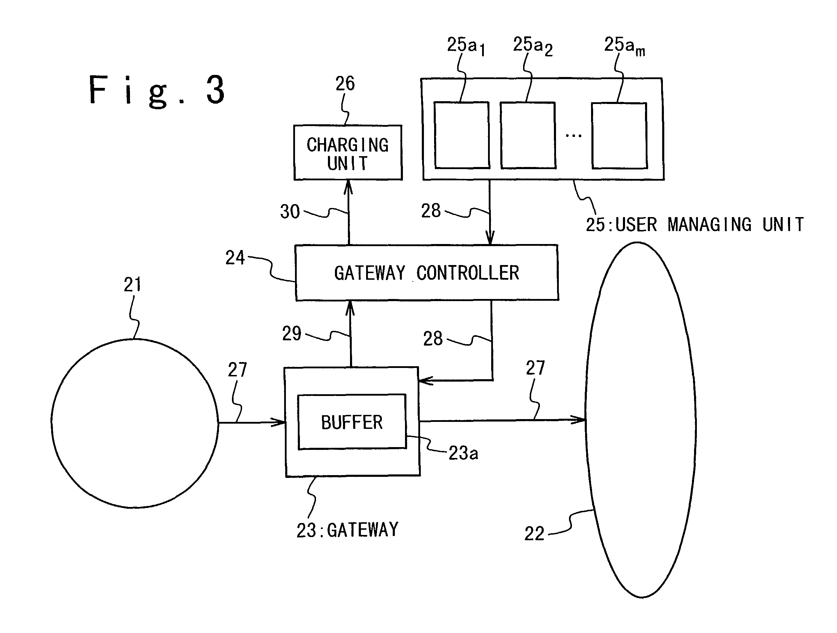

Fig. 3 shows a communication system in a second embodiment. The communication system in the second embodiment is identical to that in the first embodiment, except that the QoS can be determined for each user, and that a firewall service and a VPN (Virtual Personal Network) service are provided for a user in response to the user's request.

The communication system of the second embodiment is provided with a first communication network 21, a second communication network 22, a gateway 23, a gateway controller 24, a managing unit 25 and a charging unit 26.

The gateway 23 is a proxy server for transferring IP datagrams 27 from the first communication network 21 to the second communication network 22. The gateway 23 includes a buffer 23a. The gateway 23, while transiently buffering the IP datagrams 27 in the buffer 23a, transfers the IP datagrams 27 from the first communication network 21 to the second communication network 22. The buffer 23a is provided for each session. That is, the gateway 23 has the buffering function of buffering the IP datagrams 7 for each session.

The gateway 23 is provided with an API (Application Interface). The API allows the users to access user management tables 25a₁ to 25aₘ stored in the user managing unit 25, as described later.

The gateway controller 24 controls the gateway 23 and determines a user fee for using the communication system. The user fee is determined on the basis of a QoS for transfer of the IP datagrams 27 by the gateway 23.

The managing unit 25 includes the management tables 25a₁ to 25aₘ for determining the QoS for transfer of the IP datagrams 27. The management tables 25a₁ to 25aₘ are prepared for each user. One management table 25aₖ is prepared for one user Cₖ. Each of the management tables 25a₁ to 25aₘ describes the correspondence among a protocol used for the communication, a ToS of the IP datagram 27, and the QoS.

Moreover, each of the management tables 25a₁ to 25aₘ describes whether or not the firewall function and the VPN function are provided for each of users C₁ to Cₘ.

The API (Application Interface) provided for the gateway 23 allows users to access the management tables 25a₁ to 25aₘ. The users C₁ to Cₘ can respectively access the user management tables 25a₁ to 25aₘ through the API to set or change the QoS for the communication service thereof. Also, each of the users C₁ to Cₘ is allowed to set whether or not each of them receives the offer of the firewall service and the VPN service by accesses to each of the management tables 25a₁ to 25aₘ

The charging unit 26 settles the user fee by money transfer from an account of the user.

The process of operating the communication system of the second embodiment is described below in detail.

Let us suppose that the sessions S₁ to Sₙ are established for carrying out the communications of IP datagrams 27₁ to 27ₙ from the first communication network 21 to the second communication network 22. Here, n is a positive integer, and each IP datagram 27ᵢ is communicated in a session Sᵢ, where i is the natural number equal to or less than n. At this time, it is assumed that the session Sᵢ is established by one of the users C₁ to Cₘ. It should be noted that the user establishing the session Sᵢ may be the same as a user establishing a session Sⱼ (i≠j). Protocols used in sessions S₁ to Sₙ are determined on the basis of the content of an IP datagram by the communication terminal communicating the IP datagram.

The gateway 23 receives the IP datagrams 27 to be transmitted, from the first communication network 21. The gateway 23 detects the protocol used in the session transmitting the IP datagrams 27, from headers of the IP datagrams 27. The protocol used in each session Sᵢ is detected from the content of the header of the IP datagram 27ᵢ. Moreover, the gateway 23 detects the ToS of each of the IP datagrams 27 from the content of the headers of the IP datagrams 27.

Moreover, the gateway 23 confirms IP addresses noted in the headers of the IP datagrams 27. The IP addresses indicate the users establishing the communication sessions of the IP datagrams 27. The gateway 23 recognizes the users starting the sessions of the IP datagrams 27 from the IP addresses. The user starting the session is represented as a user Cⱼ. However, the j is natural number equal to or less than m.

In succession, the gateway 23 determines the QoS for each of the sessions of transmitting the IP datagrams 27 on the basis of the detected protocols and ToSs. The gateway 23 determines the QoS referring to the user management table 25aⱼ, corresponding to the user Cⱼ. The contents of the user management tables 25a₁ to 25aₘ are sent in advance from the user managing unit 25 to the gateway 23 on a control signal 28. Each of the management tables 25a₁ to 25aₘ describes the correspondence among the protocol, the ToS, and the QoS. The determined QoS is different depending on the user.

Similarly to the first embodiment, the priority of each of the sessions, the maximum allowable deference in the delay time, and the size of the buffer 23a prepared for each session are used for the QoS. Each of the management tables 25a₁ to 25aₘ describes the correspondence among the protocol, the ToS, the priority of the sessions, the maximum allowable deference in the delay time, and the size of the buffer 23a. The gateway 23 determines the priority of each of the sessions, the maximum allowable deference in the delay time variations, and the size of the prepared buffer 23a referring to the content of the user management table 25aⱼ provided for the user Cⱼ.

The gateway 23 transfers the IP datagrams 27 at the QoS determined through the above mentioned processes. The gateway 23 transfers the IP datagrams 27 at the priorities while keeping the delay time deference smaller than the maximum allowable deference in the delay time. Furthermore, the gateway 23 transfers the IP datagrams 27 while using the buffer 23a having the determined size.

The gateway 23 reports the QoS, the data amount of the IP datagram 27 and the communication time required to carry out the communication of the IP datagram 27 of the gateway controller 24 using an offer service information signal 29. The gateway 23 reports whether or not each user is provided with the firewall service and the VPN service, to the gateway controller 24 using the offer service information 29.

The gateway controller 24 determines the user fee for using the communication system, on the basis of the QoS, the data amount and the communication time. At this time, for the user provided with the firewall service and the VPN service, the extra fee is charged to the user. The gateway controller 24 reports the determined user fee to the charging unit 26 on a user fee information signal 30.

The charging unit 26 settles the user fee by money transfer from the account of the user on the basis of the user fee information signal 30.

In the communication system of the second embodiment, the user fee corresponding to the QoS is charged to the user, similarly to the first embodiment. This means that the user fee is charged to the user, on the basis of the convenience provided for the user. Moreover, in the second embodiment, the QoS quality is optimally changed on the basis of the protocol and the ToS.

Moreover, in the second embodiment, the QoS is determined corresponding to the user. Therefore, the communication is achieved at the QoS satisfying the need of each user.

In the second embodiment, the QoS may include the other indexes indicative of the degree of the communication service. For example, the QoS may include parameters such as the data error rate and the like. Also, a part of the indexes of the communication service quality used in the second embodiment may not be used.

Moreover, the first communication network 21 and the second communication network 22 can be any of a fixed network and a mobile communication network. Moreover, the first communication network 21 and the second communication network 22 can be a data communication network such as the Internet. Furthermore, the first communication network 21 and the second communication network 22 can be any of a public network and a private communication network.

Moreover, in the second embodiment, only one of the firewall function and the VPN function may be provided for the user, and still another communication function may be provided.

According to the present invention, the user fee for using the communication network is charged to the user on the basis of the convenience provided for the user.

Also, according to the present invention, the QoS is optimally controlled on the basis of the communication procedure. In particular, the QoS is optimally changed on the basis of the protocol used for the communication. Moreover, the QoS can be optimally changed on the basis of the ToS.

Also, according to the present invention, the QoS provided for the user is changed on the basis of the need or request of the user.

Although the invention has been described in its preferred forms with a certain degree of particularly, it is understood that the present disclosure of the preferred forms may be changed in the details of construction, and the combination and arrangement of parts may be resorted to without departing from the scope of the invention as hereinafter claimed.

Each feature disclosed in this specification (which term includes the claims) and/or shown in the drawings may be incorporated in the invention independently of other disclosed and/or illustrated features. Reference numerals appearing in the claims are by way of illustration only and shall be disregarded when interpreting the scope of the claims.

The text of the abstract filed herewith is repeated here as part of the specification.

A communication system is composed of a quality determining unit, a gateway, and a user-fee determining unit. The quality determining unit determines a QoS (quality of service). The gateway transfers an IP datagram at said QoS. The user-fee determining unit determines a user fee for said IP datagram based on said QoS.

## Claims

1. A communication system comprising:
a quality determining unit (3, 5, 23, 25) which determines a QoS (quality of service);
a gateway (3, 23) which transfers an IP (internet protocol) datagram at said QoS; and,
a user-fee determining unit (4, 24) which determines a user fee for said IP datagram based on said QoS.

2. A communication system comprising:
a gateway (3, 23) which transfers an IP datagram, wherein said gateway (3, 23) detects a protocol used for the transfer of said IP datagram; and,
a quality determining unit (3, 5, 23, 25) which determines a QoS (quality of service) based on said protocol, wherein said gateway (3, 23) transfers said IP datagram at said QoS.

3. A communication system comprising:
a gateway (3, 23) which transfers an IP datagram, wherein said gateway (3, 23) detects a protocol used for the transfer of said IP datagram; and,
a user-fee determining unit (4, 24) which determines a user fee for said IP datagram based on QoS (quality of service).

4. The communication system according to claim 1 or 2, wherein said gateway (3, 23) transfers a group of IP datagrams including said IP datagram, and said QoS includes a priority for said IP datagram in the transfer of said group of IP datagrams.

5. The communication system according to claim 1 or 2, wherein said QoS includes a maximum allowable difference from a predetermined delay time for transferring said IP datagram.

6. The communication system according to claim 1 or 2, wherein said gateway (3, 23) includes a buffer transiently storing said IP datagram, and said QoS includes a size of said buffer.

7. The communication system according to claim 1 or 2, wherein said QoS includes provision of a firewall service.

8. The communication system according to claim 1 or 2, wherein said QoS includes provision of a VTN (Virtual Personal Network) service.

9. The communication system according to claim 1 or 2, wherein said gateway (3, 23) is provided with an API (Application Interface) for accessing said quality determining unit (3, 5, 23, 25) to set said QoS.

10. The communication system according to claim 1, wherein said gateway (3, 23) detects a protocol used for the transfer of said IP datagram, and said quality determining unit (3, 5, 23, 25) determines said QoS based on said protocol.

11. The communication system according to claim 10, wherein said quality determining unit (3, 5, 23, 25) includes a first table (5a, 25a₁ to 25aₘ) indicative of a correspondence between said protocol and said QoS, and determines said QoS referring to said first table (5a, 25a₁ to 25aₘ).

12. The communication system according to claim 2 or 10, wherein said quality determining unit (3, 5, 23, 25) determines said QoS based on a ToS (Type of Service) of said IP datagram.

13. The communication system according to claim 12, wherein said quality determining unit (3, 5, 23, 25) includes a second table (5a, 25a₁ to 25aₘ) indicative of a correspondence among said protocol, said ToS and said QoS, and determines said QoS referring to said second table (5a, 25a₁ to 25aₘ).

14. The communication system according to claim 2 or 10, wherein said IP datagram includes an IP address of a user communicating said IP datagram, and said quality determining unit (23, 25) determines said QoS based on said IP address.

15. The communication system according to claim 14, wherein said quality determining unit (23, 25) includes a third table (25a₁ to 25aₘ) indicative of a correspondence among said protocol, said IP address and said QoS, and determines said QoS referring to said third table (25a₁ to 25aₘ).

16. The communication system according to claim 3, wherein said user-fee determining unit (4, 24) determines said user fee based on a ToS of said IP datagram.

17. A communication method comprising:
determining a QoS (quality of service);
transferring an IP datagram at said QoS by a communication system; and,
determining a user fee for use of said communication system based on said QoS.

18. A communication method comprising:
receiving an IP datagram;
detecting a protocol used for transmitting said IP datagram;
determining a QoS; and,
transferring said IP datagram at said QoS.

19. A communication method comprising:
transferring an IP datagram by a communication system;
detecting a protocol used for transmitting said IP datagram; and,
determining a user fee for use of said communication system based on said protocol.
